# EUROPÄISCHE PATENTSCHRIFT

(11) **EP 3 783 772 B1**
(45) Veröffentlichungstag und Bekanntmachung des Hinweises auf die Patenterteilung: **11.10.2023**
(21) Anmeldenummer: 20192412.3
(22) Anmeldetag: 24.08.2020
(51) Int. Cl.: H02K 1/16, H02K 1/18, H02K 7/18, H02K 5/24

(54) **GENERATORSTATOR EINER WINDENERGIEANLAGE**
GENERATOR STATOR OF A WIND ENERGY SYSTEM
STATOR DU GÉNÉRATEUR D'UNE ÉOLIENNE

(30) Priorität: 22.08.2019 DE 102019122575
(43) Veröffentlichungstag der Anmeldung: 24.02.2021
(73) Patentinhaber: Wobben Properties GmbH, 26607 Aurich (DE)
(72) Erfinder: Röer, Jochen, 27777 Ganderkesee (DE); Gudewer, Wilko, 26506 Norden (DE); Rosenbusch, Peter, 92500 RUEIL-MALMAISION (FR); Wollgam, Sven, 26603 Aurich (DE)
(74) Vertreter: Eisenführ Speiser

(56) Entgegenhaltungen:
- EP-A1- 3 026 792
- DE-B- 1 078 680
- DE-B- 1 085 243
- DE-C- 906 475
- GB-A- 737 825
- JP-A- S5 432 703
- JP-A- H08 103 042
- US-A1- 2002 079 781

## Beschreibung

Die Erfindung betrifft einen Generatorstator für eine Windenergieanlage mit einem Statorring und einem Statorblechpaket, wobei das Statorblechpaket mehrere Segmentbleche umfasst, die in Umfangsrichtung am Statorring angeordnet sind, wobei der Statorring und die Segmentbleche korrespondierende Formschlusselemente aufweisen, die miteinander in Eingriff stehen und einen Kraftflusspfad zwischen dem Statorring und den Segmentblechen definieren.

Die Erfindung betrifft ferner einen Generator für eine Windenergieanlage, insbesondere einen langsam drehenden Synchron-Ringgenerator, mit einem Generatorstator der eingangs genannten Art, und einem relativ zu dem Generatorstator drehbar gelagerten Generatorrotor.

Die Erfindung betrifft weiterhin eine Windenergieanlage, insbesondere getriebelose Windenergieanlage, mit einem Turm, einer auf dem Turm drehbar angeordneten Gondel, einer drehbar an der Gondel gelagerten Nabe mit einer Anzahl von Rotorblättern, und einem Generator der eingangs genannten Art zur Bereitstellung elektrischer Energie, der einen mit der Nabe verbundenen Generatorrotor aufweist.

Windenergieanlagen sind allgemein gekannt. Sie weisen einen Turm auf, auf dem eine Gondel drehbar gelagert ist. Die Gondel weist, häufig im Inneren, einen Maschinenträger auf, einen Generator, eine Antriebswelle für den Generator, optional ein Getriebe, und eine Rotornabe mit einer Anzahl von Rotorblättern, die zum Antrieb des Generators im Wind rotieren. Der Generator weist üblicherweise einen von dem Maschinenträger getragenen Generatorstator und einen relativ zu dem Generatorstator, vorzugsweise innen oder außen, umlaufenden Generatorrotor auf.

Generatorstatoren der vorbezeichneten Art sind grundsätzlich bekannt. Sie weisen üblicherweise ein Segmentblechpaket mit einer Vielzahl von Nuten zur Aufnahme einer Statorwicklung auf, in welcher durch einen an ihr entlang laufender Generatorrotor eine elektrische Leistung induziert wird.

Der Generatorrotor weist eine Vielzahl von Polschuhen auf. Die Polschuhe laufen relativ zu den Statorwicklungen des Generatorstators um. Zwischen den Polschuhen und den Wicklungen des Generatorstators ist ein Luftspalt ausgebildet, der möglichst schmal ist. Über ein Erregerfeld im Generatorrotor wird im Generatorstator eine Spannung induziert. Aufgrund des sich drehenden, immer leicht unstetig verhaltenden Erregerfeldes entstehen Drehmomentschwankungen. Diese Drehmomentschwankungen weisen üblicherweise eine von der Drehzahl des Generatorrotors abhängige Frequenz auf und können Schwingungen im Generator verursachen.

Diese im Generator erzeugten Schwingungen werden über die Tragstruktur und den Nabenflansch auf die Hauptwelle der Windenergieanlage übertragen und über diese durch die Rotornabe bis in die Rotorblätter.

Da Windenergieanlagen zunehmend auch in der Nähe besiedelter Gebiete errichtet werden, liegt ein besonderes Augenmerk auf der möglichst weitgehenden Vermeidung störender Schallemissionen.

Des Weiteren führt die Induktion elektrischer Leistung zu einer Wärmeentwicklung im Statorring und infolgedessen zu einer Ausdehnung der Segmentbleche. Die Größenschwankungen im Betrieb auszugleichen und gleichzeitig einen Formschluss des Statorblechpakets mit dem Statorring zu gewährleisten stellt weiterhin eine Herausforderung für die Windenergieanlagenhersteller dar.

JP S54 32703 A betrifft eine Struktur zur Kopplung eines Statorkerns mit einem Statorrahmen. Die Struktur umfasst einen Rahmenknochen, der zwischen Statorrahmen und Statorkern angeordnet ist. Rahmenknochen und Statorkern weisen auf einander zugewandten Bereichen Schwalbenschwanznuten auf, in denen ein Schwalbenschwanz-Profil aufgenommen und mittels eines Bolzens fixiert ist.

EP 3 026 792 A2 betrifft eine Baugruppe zum Ausgleich einer Temperaturausdehnung an einem Generator. Der Generator umfasst einen Statorrahmen und einen Statorkern. Am Statorrahmen stehen nach innen gerichtet Stützelemente vor, die über Halteteile mit am Statorkern aufgenommenen Keilstangen, welche beweglich zu den Halteteilen geführt sind, zusammenwirken.

DE 906 475 C oder US 2002/079781 A1 betreffen ebenfalls Baugruppen zum Verbinden eines Statorblechpaketes mit einem Statorring, wobei die Baugruppen jeweils in Schwalbenschwanzführungen eingesetzte Federelemente zum Ausgleichen von Temperaturausdehnungen oder Fertigungstoleranzen aufweisen.

Der Erfindung lag somit die Aufgabe zugrunde, einen Generatorstator der eingangs bezeichneten Art dahingehend zu verbessern, dass er die im Stand der Technik vorgefundenen Nachteile möglichst weitgehend überwindet. Insbesondere lag der Erfindung die Aufgabe zugrunde, einen Generatorstator dahingehend zu verbessern, dass die Windenergieanlage hinsichtlich des Schwingungsverhaltens verbessert wird, und insbesondere insgesamt möglichst geringe Geräuschemissionen abgibt.

Die Aufgabe wird in einem ersten Aspekt von einem Generatorstator gemäß Anspruch 1 gelöst. Dabei ist mindestens eines der Formschlusselemente mit mindestens einem Dämpfungselement wirkverbunden, welches in dem Kraftflusspfad angeordnet und dazu eingerichtet ist, eine Relativbewegung zwischen dem Statorring und den Segmentblechen zu dämpfen. Mithilfe der formschlüssigen Segmentblechbefestigung ist es möglich, den Kraftfluss vom Statorblechpaket zur lasttragenden Struktur, also den Statorring, zu leiten. Durch die gezielte Ausgestaltung der Schnittstelle Blech-Statorring ist eine positive Beeinflussung der Generatoreigenschaften, insbesondere eine Minimierung der Schallemissionen, möglich. Der erfindungsgemäße Generatorstator sieht hierfür vor, ein Dämpfungselement in die Schnittstelle, insbesondere in den Kraftflusspfad, zwischen Statorring und Segmentblech, zu integrieren.

Vorzugsweise ist das Statorblechpaket zwischen einem oberen Druckblech und einem unteren Druckblech eingespannt, wobei die Druckbleche mit dem Statorring nach Art einer Fest-/Loslagerung verbunden sind. Vorzugsweise sind die Druckbleche jeweils aus Druckblechsegmenten gebildet. Unter einer Fest-/Loslagerung wird hierbei verstanden, dass eines der Druckbleche in axialer Richtung des Statorringe fixiert ist, während das andere Druckblech axial nicht am Statorring fixiert ist. Durch eine solche Fest-/Loslageranordnung zusammen mit der formschlüssigen Segmentblechbefestigung ist es möglich, auf die sonst übliche Verschweißung der Druckbleche mit dem Statorring zu verzichten. Dadurch kann auf eine Befestigung mittels Schweißen verzichtet werden, was wiederum das Risiko von Generatorschäden reduziert, die beispielsweise durch das Auftreten von Schweißspritzern in der Statornut entstehen könnten. Auch die wärmebedingte Ausdehnung des Statorblechpaketes und das mechanische Setzverhalten des Blechpaketes in axialer Richtung des Statorrings werden hierdurch besser berücksichgt.

Je nach Ausgestaltung und Anordnung des Dämpfungselementes innerhalb des Kraftflusspfades kann das Dämpfungselement sowohl Relativbewegungen in radialer als auch in Umfangsrichtung ausgleichen. Des Weiteren können mithilfe des Dämpfungselementes Fertigungstoleranzen vor allem in Umfangsrichtung ausgeglichen werden. Ein Segmentblech bildet innerhalb des Statorrings einen Kreisbogenabschnitt. Zur Erzielung der Ringform werden mehrere Segmentbleche aneinandergereiht und zu einem oder mehreren Statorblechpaketen gestapelt. Um den geforderten formschlüssigen Kontakt zwischen Segmentblech und Statorring zu erreichen, können die Segmentbleche in Umfangsrichtung auf Plustoleranz gefertigt werden. Damit die Segmentbleche trotzdem passgenau in einer Ringform aneinandergereiht werden können, kann das Dämpfungselement, das in Umfangsrichtung zwischen den Segmentblechen angeordnet ist, den potentiellen Überstand ausgleichen.

Erfindungsgemäß verläuft eine Längsachse des Generatorstators bzw. des Statorrings orthogonal zu der Querschnittsfläche des Generatorstators bzw. des Statorrings durch dessen Mittelpunkt. Die radiale Richtung erstreckt sich ausgehend von dem Mittelpunkt des Generatorstators orthogonal zu der Längsachse. Die Umfangsrichtung erstreckt sich orthogonal zu der radialen Richtung und zu der Längsachse des Generatorstators.

Vorzugsweise weist das korrespondierende Formschlusselement des Statorrings zumindest abschnittsweise eine Wölbung auf, wobei sich die Wölbung in Umfangsrichtung des Statorrings erstreckt und wobei die Wölbung dazu eingerichtet ist, formschlüssig mit einer korrespondierenden Wölbung des korrespondierenden Formschlusselements der Segmentbleche in Eingriff zu stehen. Die Wölbung kann sowohl in Umfangsrichtung von dem Statorring bzw. einem Verbindungselement oder dem Segmentblech hervorstehen oder in Umfangsrichtung in den Statorring bzw. das Verbindungselement oder das Segmentblech eingelassen sein. Das bedeutet, dass die Wölbung als eine Ausnehmung oder ein Vorsprung ausgebildet ist. Erfindungsgemäß ist die Wölbung vorzugsweise konkav oder konvex geformt. Alternativ können die korrespondierenden Formschlusselemente auch jeweils aus einer Vielzahl an Wölbungen gebildet werden, beispielsweise aus einer Kombination aus konkaven und konvexen Wölbungen. Weitere durch die Erfindung nicht ausgeschlossene Ausgestaltungsmöglichkeiten der korrespondierenden Formschlusselemente können einen kantigen Verlauf vorsehen, beispielsweise in Form einer Spitze oder eines Rechtecks oder Vielecks oder eine Kombination daraus. Die Wölbung ist dazu eingerichtet, die Segmentbleche vor allem in radialer Richtung zu fixieren.

Erfindungsgemäß umfasst der Statorring mindestens ein Verbindungselement, insbesondere in Form einer sich in Richtung einer Längsachse des Statorrings erstreckenden Verbindungsleiste, welches oder welche an dem Statorring befestigt ist, wobei das korrespondierende Formschlusselement des Statorrings ein Teil des Verbindungselements ist. Das Verbindungselement weist vorzugsweise die Form einer Leiste auf und kann allgemein auch als Schachtelleiste bezeichnet werden. Ein solches Verbindungselement bzw. eine solche Verbindungsleiste wird innenseitig an den Statorring montiert. Die Anbindung der Leiste an den Statorring kann form-, kraft- und/oder stoffschlüssig erfolgen, also beispielsweise mittels einer Schraub-, Schweiß- oder Klebverbindung.

Das Verbindungselement erstreckt sich im montierten Zustand vorzugsweise in Längsrichtung zum Statorring. Besonders bevorzugt erstreckt sich das Verbindungselement parallel zu der Längsachse des Statorrings. Das Verbindungselement ist vorzugsweise derart ausgebildet, dass es im montierten Zustand mit mindestens einem Segmentblech formschlüssig in Eingriff steht.

Vorzugsweise weist es auf jeder seiner Seitenflächen, die in Umfangsrichtung beabstandet zueinander sind, jeweils ein Formschlusselement auf. Hierdurch steht das Verbindungselement in Umfangsrichtung mit jeweils mindestens einem Segmentblech auf einer ersten Seite und mindestens einem zweiten Segmentblech auf einer zweiten Seite formschlüssig in Eingriff.

Erfindungsgemäß soll verstanden sein, dass der Begriff Formschluss oder formschlüssig auch einen aufgrund von Relativbewegungen oder sonstigen Einflüssen innerhalb des Generatorstators entstehenden Spalts inkludiert. Das Formschlusselement des Verbindungselements erstreckt sich vorzugsweise entlang einer Längsachse des Verbindungselementes, die sich in Längsrichtung des Generatorstators erstreckt, sodass mehrere übereinander gestapelte Segmentbleche mit einem Verbindungselement formschlüssig in Eingriff stehen können. Mittels der formschlüssigen Verbindung sind die Segmentbleche in Umfangsrichtung fixierbar.

Gemäß der Erfindung ist das Verbindungselement mehrteilig ausgebildet und weist drei Segmente auf. Mithilfe eines mehrteiligen Aufbaus des Verbindungselementes ist es in einfacher Weise möglich, ein oder mehrere Dämpfungselemente direkt innerhalb des Verbindungselementes, also jeweils zwischen zwei Segmenten, zu integrieren. Des Weiteren ermöglicht ein segmentartiger Aufbau eine hohe Variabilität der geometrischen Anordnung. Diese kann somit bedarfsgerecht angepasst werden, ohne die Geometrie der Segmentbleche oder des Statorrings verändern zu müssen. Erfindungsgemäß ist ein dreiteiliger Aufbau des Verbindungselementes vorgesehen. Dieser ist für eine achsensymmetrische Ausrichtung an einer Radialen des Statorrings vorteilhaft.

In einer weiteren bevorzugten Ausführungsform erstreckt sich zwischen mindestens zwei benachbarten Segmenten ein Spalt mit einer ersten Spaltwand an einem ersten Segment und einer zweiten Spaltwand an einem zweiten Segment, wobei mindestens eines der Dämpfungselemente zwischen der ersten und der zweiten Spaltwand angeordnet ist. Vorzugsweise ist ein Dämpfungselement zwischen zwei benachbarten Segmenten angeordnet. Das heißt, das Dämpfungselement ist insbesondere in einem Spalt, der sich zwischen zwei benachbarten Segmenten in Längsrichtung des Statorrings erstreckt, angeordnet.

Das Dämpfungselement ist mit den sich entlang des Spalts erstreckenden Spaltwänden vorzugsweise formschlüssig verbunden. Hierbei kann das Dämpfungselement auch abschnittsweise innerhalb des Spalts angeordnet sein. Des Weiteren erstrecken sich vorzugsweise ein oder mehrere Dämpfungselemente innerhalb des Spalts. Außerdem kann der Spalt sich über mehrere benachbart zueinander angeordnete Segmente erstrecken. Vorzugsweise weist der Spalt zwei parallel beabstandet zueinander angeordnete Spaltflächen auf.

Erfindungsgemäß sind ein erstes Segment und ein zweites Segment mit einem ersten Dämpfungselement verbunden, und das zweite Segment und ein drittes Segment sind mit einem zweiten Dämpfungselement verbunden. Eine derartige Anordnung der Segmente ermöglicht eine achsensymmetrisch zu einer Radialen ausgerichtete Verbindungselementanordnung. Das erste Dämpfungselement, welches zwischen einem ersten Segment und einem zweiten Segment angeordnet ist, soll somit Relativbewegungen eines an das erste Segment angrenzenden Segmentblechs dämpfen. Das zweite Dämpfungselement, welches zwischen dem zweiten Segment und dem dritten Segment angeordnet ist, dämpft Relativbewegungen von Segmentblechen, die in Umfangsrichtung gegenüberliegend auf der zweiten Seite des Verbindungselements, also angrenzend an das dritte Segment, angeordnet sind.

In einer weiteren bevorzugten Ausführungsform weist jede Spaltwand mindestens eine Flächennormale, ausgehend von einem Mittelpunkt der Spaltwand, auf, wobei die Flächennormale jeweils eine Komponente in radialer Richtung und in Umfangsrichtung aufweist und sich in einem Winkel relativ zu der Radialen des Statorrings erstreckt. Die Ausrichtung der Spaltwände innerhalb des Verbindungselementes hat einen direkten Einfluss auf die Ausrichtung des zwischen den Spaltwänden angeordneten Dämpfungselementes und somit einen Einfluss auf die Dämpfungseigenschaften. Je nachdem in welchem Winkel der Spalt relativ zu einer Radialen angeordnet ist, werden vorzugsweise radiale oder tangentiale Kräfte aufgenommen. Die Bestimmung des Winkels erfolgt über die Flächennormale der Spaltwand. Die Flächennormale erstreckt sich ausgehend von einem Flächenmittelpunkt der Spaltwand.

Bevorzugt ist der Winkel größer 45°, wobei der Winkel vorzugsweise in einem Bereich von 50° bis 85° liegt. In einer weiteren bevorzugten Ausführungsform ist der Winkel kleiner 45°, wobei der Winkel vorzugsweise in einem Bereich von 5° bis 40° liegt. Für die Bestimmung des Winkels, ist die Flächennormale einer Spaltwand relativ zu einer Radialen des Statorrings, die den Flächenmittelpunkt der Spaltwand kreuzt, insbesondere ein Winkel kleiner oder gleich 90°, zu verwenden. Prinzipiell ist der Winkel relativ zu einer Radialen der Flächennormale der ersten Spaltwand unterschiedlich zu einem Winkel zwischen der Flächennormalen und einer Radialen der zweiten Spaltwand, zwischen denen sich das Dämpfungselement erstreckt. Parameter, die den Unterschied beeinflussen, sind im Wesentlichen die Breite und die Länge des Spalts in der Ebene, die sich durch die beiden Radialen erstreckt. Dieser Winkelunterschied ist aufgrund der Dimension des Statorrings im Verhältnis zu der Dimension der Spaltwand, die um ein Vielfaches kleiner ist, vernachlässigbar klein. Hilfsweise ist der Mittelwert der beiden Winkel, also des Winkels zwischen der ersten Radialen und der Flächennormalen der ersten Spaltwand, und des Winkels der zweiten Radialen und der Flächennormale der zweiten Spaltwand, zu bilden.

Je nach Anforderung kann der Winkel beispielsweise größer 45° oder kleiner 45° sein. Unabhängig von der Spaltdicke sowie der Länge des Dämpfungselementes, kann das Dämpfungselement je nach Ausrichtung sowohl Kräfte in Umfangsrichtung als auch Kräfte in radialer Richtung aufnehmen. Das bedeutet, für Winkel größer 45° können in größerem Maße tangentiale Kräfte aufgenommen werden, für Winkel kleiner 45° in größerem Maße radiale Kräfte. Unabhängig von dem Winkelbereich, ist ein weiterer entscheidender Faktor die Breite und Dicke des Dämpfungselementes innerhalb des Spaltes. Je nach Ausprägung in der jeweiligen Richtung, kann die Aufnahme von Kräften in tangentialer und in radialer Richtung begrenzt sein. Ausgenommen hiervon bleibt die Bewegungsfähigkeit der einzelnen Segmente. Es soll verstanden sein, dass zum Aufnehmen von Kräften in tangentialer und in radialer Richtung, eine Bewegungsfreiheit der Segmente mit dem Dämpfungselement in die jeweilige Richtung eine Grundvoraussetzung ist.

In einer weiteren bevorzugten Ausführungsform ist mindestens eine der Spaltwände zumindest abschnittsweise konvex und/oder konkav gewölbt. Hierdurch ergibt sich eine vergrößerte Oberfläche der Spaltwände, wodurch eine verbesserte Haftung von der Oberfläche des Dämpfungselementes an der Spaltwand erzielt werden kann.

Ferner ist bevorzugt, dass beide der Spaltwände zumindest abschnittsweise konvex und/oder konkav gewölbt sind, derart, dass ein konvexer Abschnitt der ersten Spaltwand einem konkaven Abschnitt der zweiten Spaltwand gegenübersteht und/oder ein konkaver Abschnitt der ersten Spaltwand einem konvexen Abschnitt der zweiten Spaltwand gegenübersteht, sodass sich ein bogenförmiger oder mäanderförmiger Spalt ergibt. Je nach Verlauf und Form des Spalts, können die Dämpfungseigenschaften gezielt beeinflusst werden. Beispielsweise kann ein mäanderförmiger Spalt zu einer Vergleichmäßigung der übertragenen Kräfte beitragen.

In einem weiteren Ausführungsbeispiel der Erfindung ist der Querschnitt des zweiten Segments im Wesentlichen trichterförmig ausgebildet, wobei das erste Segment und das dritte Segment benachbart zu dem zweiten Segment angeordnet und zu der Mittelachse des Querschnitts des zweiten Segments achsensymmetrisch angeordnet sind.

Als trichterförmig wird hierin verstanden, dass ein erster trapezförmiger Abschnitt an einen zweiten rechteckigen Abschnitt grenzt, wobei der erste Abschnitt zwei gegenüberliegende Wände aufweist, die aufeinander zulaufen und der zweite darauffolgende Abschnitt parallel zueinander, insbesondere achsensymmetrisch zu einer Radialen, verlaufende Wände aufweist.

In einer weiteren bevorzugten Ausführungsform ist das Dämpfungselement als ein Flachkörper ausgebildet. Dieser ist in einfacher Weise herstellbar.

Unter einem Flachkörper soll erfindungsgemäß ein Körper verstanden werden, dessen Länge und Breite um ein Vielfaches größer ist als dessen Dicke. Innerhalb des Statorrings, insbesondere innerhalb des Spalts des Verbindungselementes erstreckt sich die Länge des Flachkörpers parallel zu der Längsachse des Verbindungselementes, insbesondere in Richtung der Längsachse des Generatorstators. Die Breite des Flachkörpers erstreckt sich zumindest abschnittsweise entlang der Spaltwände und die Dicke erstreckt sich entlang eines Spaltabstands, insbesondere von der ersten Spaltwand zu der zweiten Spaltwand.

In einem zweiten Aspekt wird die der Erfindung zu Grunde liegenden Aufgabe durch einen Generator für eine Windenergieanlage, gelöst, wobei der Generatorstator nach einer der vorstehend beschriebenen bevorzugten Ausführungsformen ausgebildet ist.

In einem dritten Aspekt wird die der Erfindung zu Grunde liegenden Aufgabe durch eine Windenergieanlage, insbesondere getriebelose Windenergieanlage, gelöst, wobei der Generator nach einer der vorstehend beschriebenen bevorzugten Ausführungsform ausgebildet ist.

Es soll verstanden werden, dass die bevorzugten Ausführungsformen und Vorteile des Generatorstators zugleich bevorzugte Ausführungsformen und Vorteile des Generators gemäß dem zweiten Aspekt, sowie der Windenergieanlage gemäß dem dritten Aspekt sind, sodass zur Vermeidung von Wiederholungen auf das oben Stehende verwiesen wird.

Die Erfindung ist nachstehend anhand von Ausführungsbeispielen unter Bezugnahme auf die Figuren beschrieben. Es zeigen:
- Figur 1:: eine schematische perspektivische Ansicht einer Windenergieanlage.
- Figur 2:: eine schematische Teilschnittansicht einer Gondel der Windenergieanlage gem. Fig.1.
- Figur 3a:: eine schematische Teilansicht eines Generatorstators der Windenergieanlage gem. Fig.1 und 2 mit einem unteren Druckblechsegment.
- Figur 3b:: eine schematische Teilansicht eines Generatorstators der Windenergieanlage gem. Fig.1 und 2 mit einem oberen Druckblechsegment.
- Figur 4:: eine schematische Schnittdarstellung einer Teilansicht eines Generatorstators der Windenergieanlage gem. Fig.1 und 2.
- Figur 5:: eine schematische perspektivische Ansicht eines Verbindungselementes der Windenergieanlage gem. Fig.1 und 2 und eine schematische Schnittdarstellung der Windenergieanlage gem. Fig.1 und 2.
- Figur 6a:: eine schematische Schnittdarstellung des ersten Ausführungsbeispiels des Verbindungselementes gem. Fig. 5.
- Figur 6b:: eine schematische Schnittdarstellung eines zweiten Ausführungsbeispiels eines Verbindungselementes.
- Figur 7:: eine schematische Schnittdarstellung eines dritten Ausführungsbeispiels eines Verbindungselementes.
- Figur 8:: eine schematische Darstellung einer ersten und zweiten Spaltwand des Verbindungselementes gem. Fig. 6.

Einander entsprechende Teile sind in allen Zeichnungsfiguren mit den gleichen Bezugszeichen versehen.

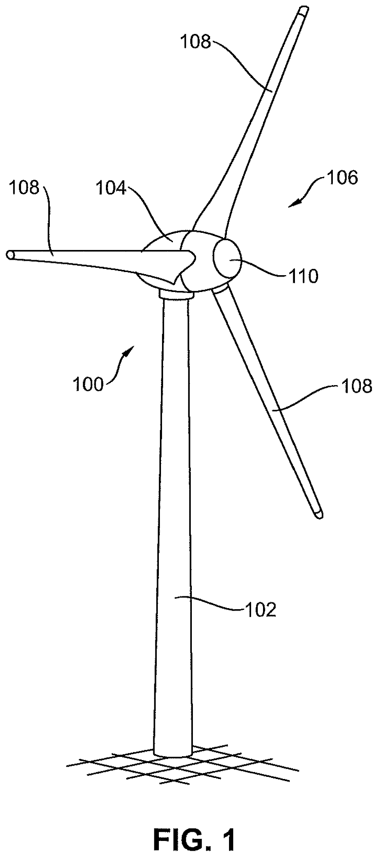

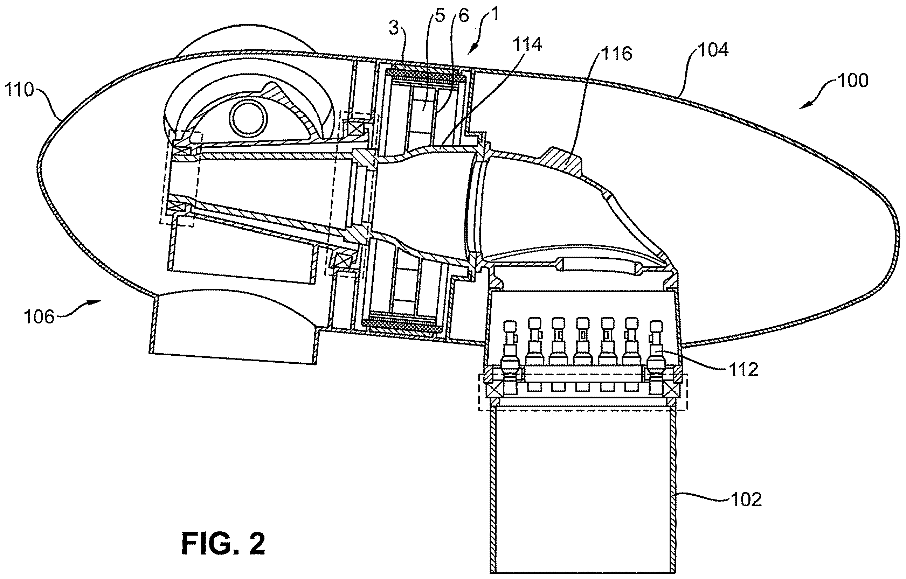

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator 1 (Fig. 2) in der Gondel 104 an.

Die Gondel 104 der Windenergieanlage 100 gemäß Fig. 1 ist in Fig. 2 schematisch in einer teilgeschnittenen Ansicht gezeigt. Die Gondel 104 ist drehbar an dem Turm 102 montiert und mittels eines Azimutantriebs 112 in allgemein bekannter Weise angetrieben verbunden. In der Gondel 104 ist ein Maschinenträger 116 ebenfalls in allgemein bekannter Weise angeordnet, der einen Achszapfen 114 trägt.

Der Generator 1 weist einen Generatorstator 5 auf, der mittels des Achszapfens 114 an dem Maschinenträger 116 in der Gondel 104 befestigt ist. Andere, durch die Erfindung nicht ausgeschlossene Ausgestaltungsmöglichkeiten sehen beispielsweise vor, den Generatorstator 5 unmittelbar an den Maschinenträger 116 oder ein entsprechendes Bauteil der Gondel 104 anzubinden.

Der Generator 1 gemäß Fig. 2 weist einen Generatorrotor 3 auf, der als Außenläufer konzipiert ist. Die Drehbewegung des Rotors 106 wird auf den Generatorrotor 3 übertragen. Alternative, vom Rahmen der Erfindung nicht ausgeschlossene Ausgestaltungsmöglichkeiten sehen beispielsweise auch einen als Innenläufer ausgestalteten Generatorrotor 3 vor. Der Generatorrotor 3 ist drehfest mit der Nabe 106 verbunden.

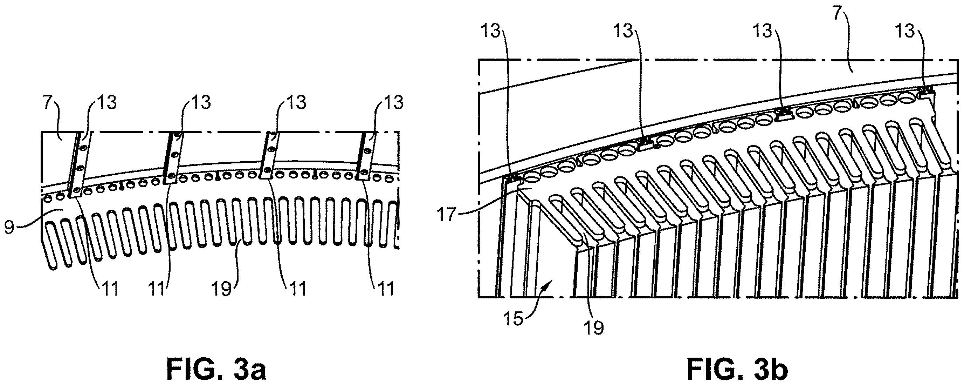

Der nähere Aufbau des Generatorstators 5 ist in Fig. 3a und 3b gezeigt. Der Generatorstator 5 weist einen hohlzylindrischen Statorring 7 auf. Außerhalb des Statorrings 7, von diesem beabstandet durch einen Ringspalt, läuft der Generatorrotor 3. Mithilfe einer Statortragstruktur 6 (Fig. 2) ist der Stator 5 mit dem Achszapfen 114 verbunden. Andere Befestigungsmöglichkeiten für den Stator 5 an dem Maschinenträger 116 liegen ebenfalls im Rahmen der Erfindung. Die Stützringe sind vergleichsweise dünnwandige Bleche, welche die Tragfähigkeit und mechanische Steifigkeit des Statorrings 7 im Wesentlichen unbeeinflusst lassen. Stattdessen ist der Statorring 7 selbsttragend ausgelegt.

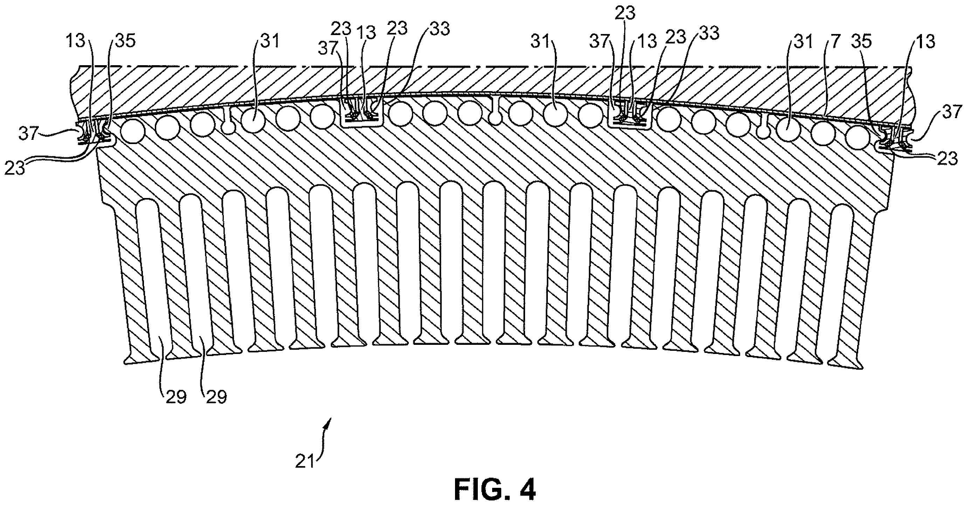

In dem Statorring 7 ist eine Vielzahl von plattenförmigen Segmentblechen 21 (Fig. 4) angeordnet, die zu Blechringen aneinandergereiht sind und derart aufeinandergestapelt werden, dass wenigstens ein Statorblechpaket 15 entsteht.

Fig. 3a zeigt eine schematische Darstellung einer Teilansicht des Statorrings 7 mit einem maschinenträgerseitig angeordneten unteren Druckblechsegment 9. Das Druckblechsegment 9 ist ringsegmentförmig ausgeführt, d. h. es weist einen um eine Mittenachse, insbesondere im montierten Zustand um die Längsachse L des Statorrings 7, gekrümmten kreisbogenförmigen Verlauf auf. Mehrere untere Druckblechsegmente 9 werden in eine umlaufende Nut im Statorring 7 eingesteckt und aneinandergereiht, um einen geschlossenen Ring auszubilden. Die Breite der Nut entspricht dabei der Stärke der unteren Druckblechsegmente 9. Die unteren Druckblechsegmente 9 werden mit einer Minustoleranz gefertigt, so dass sich beim Einstecken und Aneinanderreihen eine Lücke ausbildet, die der Summe der Teiltoleranzen der einzelnen unteren Druckblechsegmente 9 entspricht. Dies ermöglicht das Einstecken des letzten unteren Druckblechsegmentes 9 zwischen zwei benachbarte untere Druckblechsegmente 9. Nach dem Einstecken des letzten unteren Druckblechsegmentes 9 werden die Abstände zwischen den unteren Druckblechsegmenten 9 vergleichmäßigt. Die unteren Druckblechsegmente 9 weisen an ihrer dem Statorring 7 zugewandten Seite in Umfangsrichtung beabstandet angeordnete radiale Ausnehmungen 11 auf. An dem Statorring 7 werden orthogonal zu den Druckblechsegmente 9 orientierte Leisten 13 befestigt, die sich abschnittsweise in die Ausnehmungen 11 erstrecken.

Fig. 3b zeigt eine schematische Darstellung des Statorrings 7 gemäß Fig. 3a mit einem antriebsseitig, d. h. auf einer dem Rotor 106 zugewandten Seite, angeordneten oberen Druckblechsegment 17. Mehrere obere Druckblechsegmente 17 werden aneinandergereiht, um einen Ring auszubilden. Hierzu werden die oberen Druckblechsegmente 17 auf die Leisten 13 aufgesteckt. Die oberen Druckblechsegmente 17 weisen hierzu in Umfangsrichtung angeordnete radiale Ausnehmungen auf, welche formschlüssig mit den profilierten Leisten 13 in Eingriff bringbar sind. Die oberen Druckblechsegmente 17 können im Wesentlichen baugleich mit den unteren Druckblechsegmenten 9 ausgeführt sein. Zwischen den unteren Druckblechsegmenten 9 und den oberen Druckblechsegmenten 17 befindet sich das Statorblechpaket 15. Sowohl die unteren Druckblechsegmente 9 als auch die oberen Druckblechsegmente 17 weisen eine Vielzahl von korrespondierenden radialen Aussparungen 19 auf, die zur Aufnahme einer Statorwicklung angepasst sind. Während die in der umlaufenden Nut des Statorrings 7 angeordneten unteren Druckblechsegmente 9 in axialer Richtung des Statorrings 7 fixiert sind, sind die oberen Druckblechsegmente 17 in axialer Richtung verschiebbar. Die unteren Druckblechsegmente 9 und die oberen Druckblechsegmente 17 bilden so eine Art Festlager-Loslager-Anordnung, zwischen denen das Statorblechpaket 15 angeordnet ist.

Das Statorblechpaket 15 besteht aus einer Vielzahl von Segmentblechen 21, von denen eines schematisch in Fig. 4 dargestellt ist. Das in Fig. 4 gezeigte Segmentblech 21 ist ringsegmentförmig ausgeführt, d. h. es weist einen um eine Mittenachse, insbesondere im montierten Zustand um die Längsachse L des Statorrings 7, gekrümmten kreisbogenförmigen Verlauf auf. Das Segmentblech 21 weist, an seiner dem Statorring abgewandten Seite, eine Vielzahl von Aussparungen 29 auf. Die Aussparungen 29 sind zur Aufnahme einer Statorwicklung angepasst. Das Segmentblech 21 weist eine Vielzahl von Durchgangsöffnungen 31 auf, welche der Durchführung von Verspannmitteln dienen. Die Verspannmittel können beispielsweise als Gewindestangen, Schrauben, Spannseile und dergleichen ausgeführt sein. Das Segmentblech 21 ist an seiner dem Statorring 7 zugewandten Seite mit zumindest einer radialen Ausnehmung 33 versehen, die einen im Wesentlichen U-förmigen Querschnitt aufweist. Im dargestellten Ausführungsbeispiel sind zwei radiale Ausnehmungen 33 in das Segmentblech 21 eingebracht. Die Abmessungen der Ausnehmungen 33 sind derart gewählt, dass die jeweilige Leiste 13 von der Ausnehmung 33 berührungslos umschlossen ist.

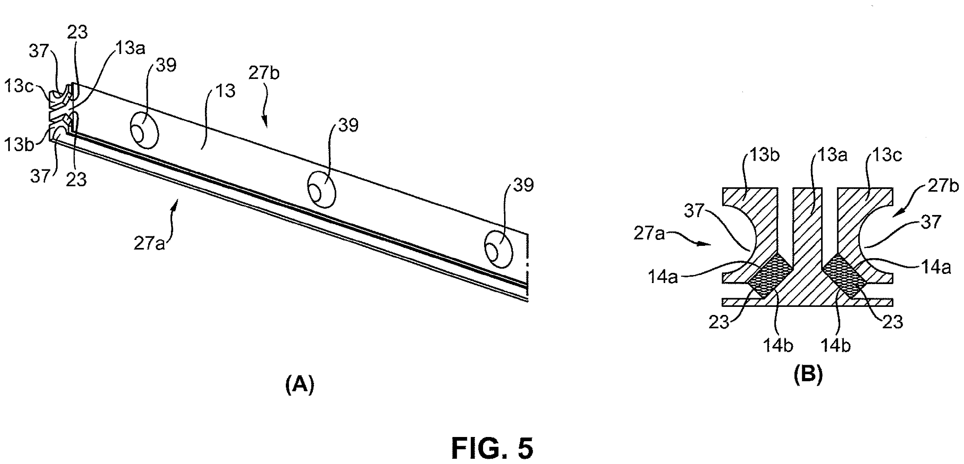

Fig. 5 zeigt eine schematische Darstellung eines Ausführungsbeispiels einer Leiste 13, in einer perspektivischen Ansicht (A) und in einer Schnittansicht (B), in der ein erfindungsgemäßes Dämpfungselement 23 angeordnet ist.

Die Leiste 13 umfasst drei Segmente (13a, 13b, 13c). Die drei Segmente (13a, 13b, 13c) sind, insbesondere im montierten Zustand in der radialen Ebene, orthogonal zu der Längsachse L1 der Leiste 13 separiert voneinander und weisen einen sich jeweils zwischen zwei Segmenten (13b und 13a; 13a und 13c) erstreckenden Spalt auf. Der Spalt wird jeweils durch eine erste Spaltwand 14a eines ersten Segments (13b, 13c) und einer zweiten Spaltwand 14b eines zweiten Segments 13a begrenzt. Zwischen den Segmenten (13a, 13b, 13c), insbesondere zwischen zwei Spaltwänden 14, ist jeweils ein Dämpfungselement 23 angeordnet.

Das Dämpfungselement 23 ist im gezeigten Ausführungsbeispiel als Flachkörper ausgebildet und erstreckt sich entlang der Längsachse L1, parallel zu der Längsachse L des Statorrings, vorzugsweise entlang der gesamten Länge, der Leiste 13. Das Dämpfungselement besteht aus einem elastischen, vorzugsweise gummiähnlichen Material zur Erzielung einer schlag-, stoß-, schwingungs- und vibrationsdämpfenden Wirkung.

Die Leiste weist mehrere entlang ihrer Längsachse L1 angeordnete Durchgangsbohrungen 39 auf, die dazu eingerichtet sind, jeweils eine Schraube zur Befestigung der Leiste 13 am Statorring 7 aufzunehmen. Die Durchgangsbohrungen 39 sind in dem zweiten Segment 13a angeordnet.

Weiterhin weisen die äußeren Segmente, in dem gezeigten Ausführungsbeispiel also das erste Segment 13b und das dritte Segment 13c, der Leiste 13 jeweils an ihrer äußeren Seitenfläche (27a, 27b) jeweils eine sich entlang der Längsachse L1 der Leiste 13 erstreckende, insbesondere im montierten Zustand in Umfangsrichtung zum Statorring 7 konkav ausgebildete, Ausnehmung auf. Die Ausnehmung des ersten Segments 13b und die Ausnehmung des dritten Segments 13c bilden hier jeweils ein Formschlusselement 37 des Statorrings. Die Formschlusselemente 37 des Statorrings 7 sind mit korrespondierenden Formschlusselementen 35 der Segmentbleche 21, die hier als konvexe Vorsprünge ausgebildet sind, formschlüssig in Eingriff bringbar.

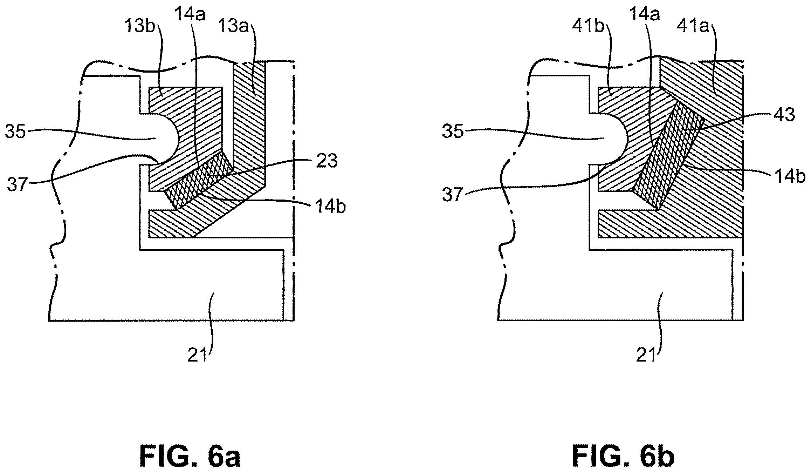

Fig. 6a zeigt eine schematische Darstellung einer Schnittansicht des ersten Ausführungsbeispiels einer Leiste 13 gemäß Figur 5, in der ein erfindungsgemäßes Dämpfungselement 23 angeordnet ist, mit einer Teilansicht eines Segmentbleches 21 sowie des Statorrings 7. Hierbei steht das Formschlusselement 37 des Statorrings 7, insbesondere der Leiste 13, mit dem Formschlusselement 35 des Segmentblechs 21 formschlüssig in Eingriff. Die Leiste 13 steht mit dem Statorring 7 im montierten Zustand formschlüssig in Kontakt.

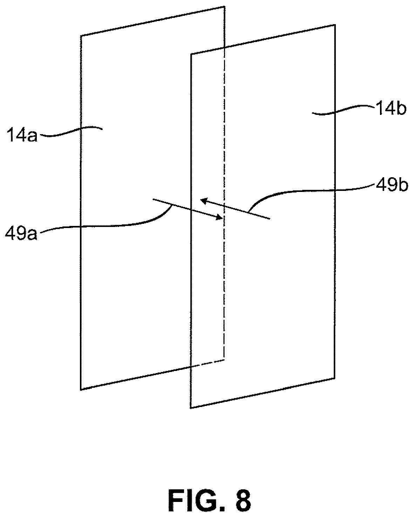

Fig. 8 veranschaulicht in Ergänzung zu Fig. 6a, dass sich eine jeweilige Flächennormale 49 der ersten Spaltwand 14a und der zweiten Spaltwand 14b des Spalts zwischen dem ersten Segment 13b und dem zweiten Segment 13a in einem Winkel relativ zu einer Radialen des Statorrings 7 erstreckt, der kleiner als 45° ist, was sich vorwiegend zur Aufnahme von Kräften in Umfangsrichtung eignet.

Fig. 6b zeigt eine schematische Darstellung einer Schnittansicht eines zweiten Ausführungsbeispiels einer Leiste 41, in der ein erfindungsgemäßes Dämpfungselement 43 angeordnet ist, mit einer Teilansicht eines Segmentbleches 21 sowie des Statorrings 7. Hierbei steht das Formschlusselement 37 des Statorrings 7, insbesondere der Leiste 41, mit dem Formschlusselement 35 des Segmentblechs 21 formschlüssig in Eingriff. Die Leiste 41 steht mit dem Statorring 7 im montierten Zustand formschlüssig in Kontakt. Die jeweilige Flächennormale 49 (vgl. wiederum Fig. 8) der ersten Spaltwand 14a und der zweiten Spaltwand 14b des Spalts zwischen dem ersten Segment 41b und dem zweiten Segment 41a erstrecken sich in einem Winkel relativ zu einer Radialen des Statorrings 7, der größer als 45° ist. In Diesem Fall werden vorwiegend Kräfte in radialer Richtung aufgenommen.

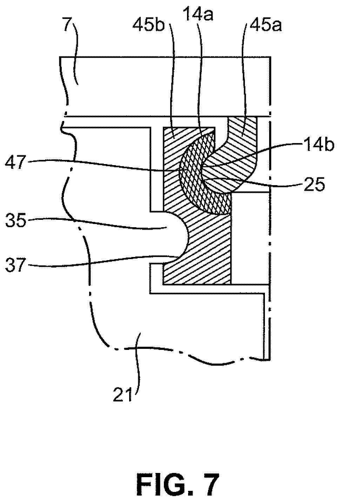

Fig. 7 zeigt eine schematische Darstellung einer Schnittansicht eines dritten Ausführungsbeispiels einer Leiste 45, in der ein erfindungsgemäßes Dämpfungselement 47 angeordnet ist, mit einer Teilansicht eines Segmentbleches 21 sowie des Statorrings 7. Hierbei steht das Formschlusselement 37 des Statorrings 7, insbesondere der Leiste 45, mit dem Formschlusselement 35 des Segmentblechs 21 formschlüssig in Eingriff. Die Leiste 45 steht mit dem Statorring 7 im montierten Zustand formschlüssig in Kontakt.

Die Leiste 45 ist dreiteilig aufgebaut mit einem ersten Segment 45b, einem zweiten Segment 45a und einem dritten Segment 45c. Das erste Segment 45b und das dritte Segment 45c sind achsensymmetrisch zu einer Radialen des Statorrings 7 und benachbart zu einem zweiten Segment 45a angeordnet. Zwischen dem ersten Segment 45b und dem zweiten Segment 45a sowie zwischen dem zweiten Segment 45a und dem dritten Segment 45c erstreckt sich jeweils ein Spalt in dem jeweils ein Dämpfungselement 47 angeordnet ist.

Der Spalt erstreckt sich entlang der Längsachse L1 der Leiste 45 und weist in der radialen Ebene einen bogenförmigen Verlauf auf. Insbesondere weist das zweite Segment 45a an jeder seiner in Umfangsrichtung beabstandet zueinander angeordneten zweiten Spaltwände 14b eine Wölbung 25 in Umfangsrichtung auf, insbesondere konvex gewölbte Vorsprünge. An die gewölbten Vorsprünge schließt sich, insbesondere parallel entsprechend der Spaltbreite beabstandet dazu, eine korrespondierende Ausnehmung an einer ersten Spaltwand 14a des ersten Segments 45b an und eine korrespondierende Ausnehmung an einer ersten Spaltwand 14a des dritten Segments 45c an. Das Dämpfungselement 47 ist innerhalb des sich zwischen den Segmenten (45a, 45b, 45c) erstreckenden Spalts, insbesondere zwischen der jeweiligen ersten Spaltwand 14a und der jeweiligen zweiten Spaltwand 14b, zumindest abschnittsweise entlang der Wölbung 25 angeordnet.

### Bezugszeichenliste:

- 1: Generator
- 3: Generatorrotor
- 5: Generatorstator
- 6: Statortragstruktur
- 7: Statorring
- 9: unteres Druckblechsegment
- 11: Ausnehmung
- 13: Leiste mit Segmenten (13a, 13b, 13c)
- 14: Spaltwand (14a, 14b)
- 15: Statorblechpaket
- 17: oberes Druckblechsegment
- 19: Aussparung
- 21: Segmentblech
- 23: Dämpfungselement
- 25: Wölbung
- 27: Seitenfläche der Leiste (27a, 27b)
- 29: Aussparung
- 31: Durchgangsöffnungen
- 33: Ausnehmung
- 35: Formschlusselement des Segmentbleches
- 37: Formschlusselement des Statorrings
- 39: Durchgangsbohrung
- 41: Leiste mit Segmenten (41a, 41b, 41c)
- 43: Dämpfungselement
- 45: Leiste mit Segmenten (45a, 45b, 45c)
- 47: Dämpfungselement
- 49: Flächennormale (49a, 49b)

- 100: Windenergieanlage
- 102: Turm
- 104: Gondel
- 106: Rotor
- 108: Rotorblätter
- 110: Spinner
- 112: Azimutantrieb
- 114: Achszapfen
- 116: Maschinenträger

- L: Längsachse des Generatorstators bzw. des Statorrings
- L1: Längsachse der Leiste

## Patentansprüche

1. Generatorstator (5) für eine Windenergieanlage (100) mit
einem Statorring (7) und
einem Statorblechpaket (15), wobei das Statorblechpaket (15) mehrere Segmentbleche (21) umfasst, die in Umfangsrichtung am Statorring (7) angeordnet sind,
wobei der Statorring (7) und die Segmentbleche (21) korrespondierende Formschlusselemente (35, 37) aufweisen, die miteinander in Eingriff stehen und einen Kraftflusspfad zwischen dem Statorring (7) und den Segmentblechen (21) definieren,
wobei mindestens eines der Formschlusselemente (35, 37) mit mindestens einem Dämpfungselement (23, 43, 47) wirkverbunden ist, welches in dem Kraftflusspfad angeordnet und dazu eingerichtet ist, eine Relativbewegung zwischen dem Statorring (7) und den Segmentblechen (21) zu dämpfen, und
der Statorring (7) mindestens ein Verbindungselement (13, 41, 45) umfasst, insbesondere in Form einer sich in Richtung einer Längsachse (L) des Statorrings erstreckenden Verbindungsleiste, welches oder welche an dem Statorring (7) befestigt ist, wobei das korrespondierende Formschlusselement (37) des Statorrings (7) ein Teil des Verbindungselements (13, 41, 45) ist,
**dadurch gekennzeichnet, dass** das Verbindungselement (13, 41, 45) mehrteilig ausgebildet ist und drei Segmente (13a, 13b, 13c; 41a, 41b, 41c; 45a, 45b, 45c) aufweist, und
dass ein erstes Segment (13b, 41b, 45b) und ein zweites Segment (13a, 41a, 45a) mit einem ersten Dämpfungselement (23, 43, 47) verbunden sind, und das zweite Segment (13a, 41a, 45a) und ein drittes Segment (13c, 41c, 45c) mit einem zweiten Dämpfungselement (23, 43, 47) verbunden sind.

2. Generatorstator (5) nach Anspruch 1,
**dadurch gekennzeichnet, dass** das korrespondierende Formschlusselement (37) des Statorrings (7) zumindest abschnittsweise eine Wölbung aufweist, wobei sich die Wölbung in Umfangsrichtung des Statorrings (7) erstreckt und wobei die Wölbung dazu eingerichtet ist, formschlüssig mit einer korrespondierenden Wölbung des korrespondierenden Formschlusselements (35) der Segmentbleche (21) in Eingriff zu stehen.

3. Generatorstator nach Anspruch 1 oder 2,
**dadurch gekennzeichnet, dass** sich zwischen mindestens zwei benachbarten Segmenten ein Spalt erstreckt mit einer ersten Spaltwand (14a) an einem ersten Segment und einer zweiten Spaltwand (14b) an einem zweiten Segment, wobei mindestens eines der Dämpfungselemente (23, 43, 47) zwischen der ersten und der zweiten Spaltwand (14a, 14b) angeordnet ist.

4. Generatorstator (5) nach Anspruch 3,
**dadurch gekennzeichnet, dass** jede Spaltwand (14) mindestens eine Flächennormale, ausgehend von einem Mittelpunkt der Spaltwand (14), aufweist, wobei die Flächennormale jeweils eine Komponente in radialer Richtung und in Umfangsrichtung aufweist und sich in einem Winkel relativ zu der Radialen des Statorrings (7) erstreckt.

5. Generatorstator (5) nach Anspruch 4,
**dadurch gekennzeichnet, dass** der Winkel größer 45° ist, wobei der Winkel vorzugsweise in einem Bereich von 50° bis 85° liegt.

6. Generatorstator (5) nach Anspruch 4,
**dadurch gekennzeichnet, dass** der Winkel kleiner 45° ist, wobei der Winkel vorzugsweise in einem Bereich von 5° bis 40° liegt.

7. Generatorstator (5) nach mindestens einem der Ansprüche 3 bis 6,
**dadurch gekennzeichnet, dass** mindestens eine der Spaltwände (14) zumindest abschnittsweise konvex und/oder konkav gewölbt ist.

8. Generatorstator (5) nach mindestens einem der Ansprüche 3 bis 6,
**dadurch gekennzeichnet, dass** beide der Spaltwände (14) zumindest abschnittsweise konvex und/oder konkav gewölbt sind, derart, dass ein konvexer Abschnitt der ersten Spaltwand (14a) einem konkaven Abschnitt der zweiten Spaltwand (14b) gegenübersteht und/oder ein konkaver Abschnitt der ersten Spaltwand (14a) einem konvexen Abschnitt der zweiten Spaltwand (14b) gegenübersteht, sodass sich ein bogenförmiger oder mäanderförmiger Spalt ergibt.

9. Generatorstator (5) nach mindestens einem der Ansprüche 1 bis 8,
**dadurch gekennzeichnet, dass** der Querschnitt des zweiten Segments (13a, 41a, 45a) im Wesentlichen trichterförmig ausgebildet ist, wobei das erste Segment (13b, 41b, 45b) und das dritte Segment (13c, 41c, 45c) benachbart zu dem zweiten Segment (13a, 41a, 45a) angeordnet und zu der Mittelachse des Querschnitts des zweiten Segments (13a, 41a, 45a) achsensymmetrisch angeordnet sind.

10. Generatorstator (5) nach mindestens einem der vorstehenden Ansprüche,
**dadurch gekennzeichnet, dass** das Dämpfungselement (23, 43, 47) als ein Flachkörper ausgebildet ist.

11. Generator (1) für eine Windenergieanlage (100), insbesondere ein langsam drehender Synchron-Ringgenerator, mit
einem Generatorstator (5), und einem relativ zu dem Generatorstator (5) drehbar gelagerten Generatorrotor (3),
**dadurch gekennzeichnet, dass**
der Generatorstator (5) nach mindestens einem der Anspruch 1 bis 10 ausgebildet ist.

12. Windenergieanlage (100), insbesondere getriebelose Windenergieanlage, mit
einem Turm (102),
einer auf dem Turm (102) drehbar angeordneten Gondel (104),
einer drehbar an der Gondel (104) gelagerten Nabe mit einer Anzahl von Rotorblättern (108), und
einem Generator (1) zur Bereitstellung elektrischer Energie, der einen mit der Nabe verbundenen Generatorrotor (3) aufweist,
**dadurch gekennzeichnet, dass** der Generator (1) nach Anspruch 11 ausgebildet ist.

## Claims

1. Generator stator (5) for a wind turbine (100) having a stator ring (7) and a laminated stator core (15), wherein the laminated stator core (15) has a plurality of segment sheets (21) which are arranged in a circumferential direction on the stator ring (7), wherein the stator ring (7) and the segment sheets (21) have corresponding positive-locking elements (35, 37) which are in engagement with each other and which define a force flow path between the stator ring (7) and the segment sheets (21),
wherein at least one of the positive-locking elements (35, 37) is operationally connected to at least one damping element (23, 43, 47) which is arranged in the force flow path and which is configured to damp a relative movement between the stator ring (7) and the segment sheets (21), and
the stator ring (7) comprises at least one connection element (13, 41, 45), in particular in the form of a connection strip which extends in the direction of a longitudinal axis (L) of the stator ring and which is/are secured to the stator ring (7), wherein the corresponding positive-locking element (37) of the stator ring (7) is a portion of the connection element (13, 41, 45),
**characterised in that** the connection element (13, 41, 45) is constructed in several pieces and has three segments (13a, 13b, 13c; 41a, 41b, 41c; 45a, 45b, 45c) and
**in that** a first segment (13b, 41b, 45b) and a second segment (13a, 41a, 45a) are connected to a first damping element (23, 43, 47) and the second segment (13a, 41a, 45a) and a third segment (13c, 41c, 45c) are connected to a second damping element (23, 43, 47).

2. Generator stator (5) according to claim 1,
**characterised in that** the corresponding positive-locking element (37) of the stator ring (7) at least partially has a curvature, wherein the curvature extends in the circumferential direction of the stator ring (7) and wherein the curvature is configured to be in engagement with a corresponding curvature of the corresponding positive-locking element (35) of the segment sheets (21) in a positive-locking manner.

3. Generator stator according to claim 1 or 2,
**characterised in that** a gap extends between at least two adjacent segments with a first gap wall (14a) on a first segment and with a second gap wall (14b) on a second segment, wherein at least one of the damping elements (23, 43, 47) is arranged between the first and the second gap wall (14a, 14b).

4. Generator stator (5) according to claim 3,
**characterised in that** each gap wall (14) has at least one surface normal, starting from a centre of the gap wall (14), wherein the surface normal in each case has a component in a radial direction and in a circumferential direction and extends at an angle relative to the radial of the stator ring (7) .

5. Generator stator (5) according to claim 4,
**characterised in that** the angle is greater than 45°, wherein the angle is preferably in a range from 50° to 85°.

6. Generator stator (5) according to claim 4,
**characterised in that** the angle is less than 45°, wherein the angle is preferably in a range from 5° to 40°.

7. Generator stator (5) according to at least one of claims 3 to 6,
**characterised in that** at least one of the gap walls (14) is curved at least partially in a convex and/or concave manner.

8. Generator stator (5) according to at least one of claims 3 to 6,
**characterised in that** both of the gap walls (14) are curved at least partially in a convex and/or concave manner in such a manner that a convex portion of the first gap wall (14a) is opposite a concave portion of the second gap wall (14b) and/or a concave portion of the first gap wall (14a) is opposite a convex portion of the second gap wall (14b) so that a curved or meandering gap is produced.

9. Generator stator (5) according to at least one of claims 1 to 8,
**characterised in that** the cross-section of the second segment (13a, 41a, 45a) is constructed in a substantially funnel-like manner, wherein the first segment (13b, 41b, 45b) and the third segment (13c, 41c, 45c) are arranged adjacent to the second segment (13a, 41a, 45a) and are arranged in an axially symmetrical manner with respect to the centre axis of the cross-section of the second segment (13a, 41a, 45a).

10. Generator stator (5) according to at least one of the preceding claims,
**characterised in that** the damping element (23, 43, 47) is in the form of a flat member.

11. Generator (1) for a wind turbine (100), in particular a slowly rotating synchronous ring generator, having a generator stator (5) and a generator rotor (3) which is rotatably supported relative to the generator stator (5), **characterised in that** the generator stator (5) is constructed according to at least one of claims 1 to 10.

12. Wind turbine (100), in particular a gearless wind turbine, having a tower (102),
a nacelle (104) which is rotatably arranged on the tower (102),
a hub which is rotatably supported on the nacelle (104) and which has a number of rotor blades (108), and
a generator (1) for providing electrical energy which has a generator rotor (3) which is connected to the hub,
**characterised in that** the generator (1) is constructed according to claim 11.

## Revendications

1. Stator de générateur (5) pour une éolienne (100) avec
une bague de stator (7) et
un paquet de tôles statoriques (15), dans lequel le paquet de tôles statoriques (15) comprend plusieurs tôles de segment (21), qui sont disposées dans la direction périphérique sur la bague de stator (7),
dans lequel la bague de stator (7) et les tôles de segment (21) présentent des éléments à complémentarité de forme (35, 37) correspondants, qui sont en prise les uns avec les autres, et définissent un trajet de flux de force entre la bague de stator (7) et les tôles de segment (21),
dans lequel au moins un des éléments à complémentarité de forme (35, 37) interagit avec au moins un élément d'amortissement (23, 43, 47), lequel est disposé sur le trajet de flux de force et est mis au point pour amortir un déplacement relatif entre la bague de stator (7) et les tôles de segment (21), et
la bague de stator (7) comprend au moins un élément de liaison (13, 41, 45), en particulier sous la forme d'une baguette de liaison s'étendant en direction d'un axe longitudinal (L) de la bague de stator, lequel ou laquelle est fixé ou fixée sur la bague de stator (7), dans lequel l'élément à complémentarité de forme (37) correspondant de la bague de stator (7) fait partie de l'élément de liaison (13, 41, 45),
**caractérisé en ce que** l'élément de liaison (13, 41, 45) est réalisé en plusieurs parties et présente trois segments (13a, 13b, 13c ; 41a, 41b, 41c ; 45a, 45b, 45c), et
qu'un premier segment (13b, 41b, 45b) et un deuxième segment (13a, 41a, 45a) sont reliés à un premier élément d'amortissement (23, 43, 47), et le deuxième segment (13a, 41a, 45a) et un troisième segment (13c, 41c, 45c) sont reliés à un deuxième élément d'amortissement (23, 43, 47).

2. Stator de générateur (5) selon la revendication 1,
**caractérisé en ce que** l'élément à complémentarité de forme (37) correspondant de la bague de stator (7) présente au moins par endroits un bombement, dans lequel le bombement s'étend dans la direction périphérique de la bague de stator (7) et dans lequel le bombement est mis au point pour se trouver en prise par complémentarité de forme avec un bombement correspondant de l'élément à complémentarité de forme (35) correspondant des tôles de segment (21).

3. Stator de générateur selon la revendication 1 ou 2,
**caractérisé en ce qu'**une fente s'étend entre au moins deux segments adjacents, avec une première paroi de fente (14a) sur un premier segment et une deuxième paroi de fente (14b) sur un deuxième segment, dans lequel au moins un des éléments d'amortissement (23, 43, 47) est disposé entre la première et la deuxième paroi de fente (14a, 14b).

4. Stator de générateur (5) selon la revendication 3,
**caractérisé en ce que** chaque paroi de fente (14) présente au moins une normale de surface en partant d'un point central de la paroi de fente (14), dans lequel la normale de surface présente respectivement un composant dans la direction radiale et dans la direction périphérique et s'étend selon un angle par rapport à la radiale de la bague de stator (7).

5. Stator de générateur (5) selon la revendication 4,
**caractérisé en ce que** l'angle est supérieur à 45°, dans lequel l'angle se situe de préférence dans une plage de 50° à 85°.

6. Stator de générateur (5) selon la revendication 4,
**caractérisé en ce que** l'angle est inférieur à 45°, dans lequel l'angle se situe de préférence dans une plage de 5° à 40°.

7. Stator de générateur (5) selon au moins l'une quelconque des revendications 3 à 6,
**caractérisé en ce qu'**au moins une des parois de fente (14) est bombée de manière convexe et/ou concave au moins par endroits.

8. Stator de générateur (5) selon au moins l'une quelconque des revendications 3 à 6,
**caractérisé en ce que** deux des parois de fente (14) sont bombées au moins par endroits de manière convexe et/ou concave de telle manière qu'une section convexe de la première paroi de fente (14a) fait face à une section concave de la deuxième paroi de fente (14b) et/ou une section concave de la première paroi de fente (14a) fait face à une section convexe de la deuxième paroi de fente (14b), de sorte qu'il en résulte une fente en forme 'arc ou en forme de méandre.

9. Stator de générateur (5) selon au moins l'une quelconque des revendications 1 à 8,
**caractérisé en ce que** la section transversale du deuxième segment (13a, 41a, 45a) est réalisée en forme sensiblement d'entonnoir, dans lequel le premier segment (13b, 41b, 45b) et le troisième segment (13c, 41c, 45c) sont disposés de manière adjacente au deuxième segment (13a, 41a, 45a) et sont disposés de manière symétrique axialement par rapport à l'axe central de la section transversale du deuxième segment (13a, 41a, 45a).

10. Stator de générateur (5) selon au moins l'une quelconque des revendications précédentes,
**caractérisé en ce que** l'élément d'amortissement (23, 43, 47) est réalisé en tant qu'un corps plat.

11. Générateur (1) pour une éolienne (100), en particulier générateur annulaire synchrone à rotation lente, avec
un stator de générateur (5) et un rotor de générateur (3) monté de manière à pouvoir tourner par rapport au stator de générateur (5),
**caractérisé en ce que**
le stator de générateur (5) est réalisé selon au moins l'une des revendications 1 à 10.

12. Eolienne (100), en particulier éolienne sans engrenage, avec un mât (102),
une nacelle (104) disposée de manière à pouvoir tourner sur le mât (102),
un moyeu monté de manière rotative sur la gondole (104) avec un nombre de pales de rotor (108), et
un générateur (1) pour fournir de l'énergie électrique, qui présente un rotor de générateur (3) relié au moyeu,
**caractérisé en ce que** le générateur (1) est réalisé selon la revendication 11.
